# EUROPÄISCHE PATENTSCHRIFT

(11) **EP 3 159 660 B1**
(45) Veröffentlichungstag und Bekanntmachung des Hinweises auf die Patenterteilung: **25.04.2018**
(21) Anmeldenummer: 16190120.2
(22) Anmeldetag: 22.09.2016
(51) Int. Cl.: G01D 5/241

(54) **VERFAHREN UND DREHWINKELSENSOR ZUM MESSEN EINER WINKELSTELLUNG EINER DREHBAREN GEBEREINHEIT**
METHOD AND ANGLE SENSOR FOR MEASURING AN ANGLE OF A ROTATABLE ENCODER UNIT
PROCÉDÉ ET CAPTEUR DE ROTATION DESTINÉ À MESURER UNE POSITION ANGULAIRE D'UN CAPTEUR ROTATIF

(30) Priorität: 23.10.2015 DE 102015118083
(43) Veröffentlichungstag der Anmeldung: 26.04.2017
(73) Patentinhaber: Miele & Cie. KG, 33332 Gütersloh (DE)
(72) Erfinder: Kurte, Jens, 33602 Bielefeld (DE); Evertzberg, Frank, 33428 Marienfeld (DE); Banmann, Johann, 33334 Gütersloh (DE); Büse, Oliver, 59597 Erwitte (DE); Schacht, Florian, 33332 Gütersloh (DE)

(56) Entgegenhaltungen:
- EP-A2- 2 270 433
- DE-A1-102009 043 977
- US-B1- 7 023 684

## Beschreibung

Verfahren und Drehwinkelsensor zum Messen einer Winkelstellung einer drehbaren Gebereinheit

Die Erfindung betrifft ein Verfahren und einen Drehwinkelsensor zum Messen einer Winkelstellung einer drehbaren Gebereinheit für ein Hausgerät sowie eine Sensoreinheit, eine Gebereinheit und eine Auswerteeinheit für einen Drehwinkelsensor und schließlich ein Haushaltsgerät mit einem Drehwinkelsensor.

Für die Bedienung eines Hausgerätes mittels eines konventionellen Drehwahlschalters (DWS) ist eine Durchgangsöffnung durch eine Bedienblende notwendig, um die Drehwinkelstellung des Drehwahlschalters mithilfe einer Welle auf die sich hinter der Bedienblende befindende Auswertelektronik zu übertragen. Bisher erfolgt die Auswertung der Drehwinkelposition auf der Bedien- und Anzeigeelektronik hinter der Geräteblende. Es können geräteabhängig inkrementelle oder absolute Auswertverfahren zum Einsatz kommen. Gängige Technologien sind unter anderem die optische Auswertung mittels Codier-Scheiben, Encoder, Bit-Generatoren, Potentiometer und mechanische Schaltkontakte. Alle Technologien benötigen zur mechanischen Übertragung des Drehwinkels eine Durchgangsöffnung auf der Geräteblende.

Die EP 0 844 325 A2 beschreibt eine Betätigungs- und Anzeigevorrichtung. Die US 7 023 684 B1 offenbart ein kapazitiven Encoder mit Rotor und Stator. Der Erfindung stellt sich die Aufgabe, ein verbessertes Verfahren zum Messen einer Winkelstellung einer drehbaren Gebereinheit, einen verbesserten Drehwinkelsensor zum Messen einer Winkelstellung einer drehbaren Gebereinheit sowie eine verbesserte Sensoreinheit, eine verbesserte Gebereinheit und eine verbesserte Auswerteeinheit für einen Drehwinkelsensor sowie ein verbessertes Haushaltsgerät bereitzustellen.

Erfindungsgemäß wird diese Aufgabe durch ein Verfahren zum Messen einer Winkelstellung einer drehbaren Gebereinheit, einen Drehwinkelsensor zum Messen einer Winkelstellung einer drehbaren Gebereinheit, eine Sensoreinheit, eine Gebereinheit und eine Auswerteeinheit für einen Drehwinkelsensor sowie ein Haushaltsgerät mit den Merkmalen der Hauptansprüche gelöst. Vorteilhafte Ausgestaltungen und Weiterbildungen der Erfindung ergeben sich aus den nachfolgenden Unteransprüchen.

Bei dem hier vorgestellten Ansatz kann die verschleißbehaftete mechanische Verbindung zwischen einem Drehwinkelschalter und einer Auswerteelektronik entfallen. Dadurch ergeben sich ein verringerter Fertigungsaufwand und reduzierte Kosten. Bei gespritzten Kunststoffblenden wird die Fertigung durch den Entfall von Bindenähten erleichtert. Durch das Fehlen einer Durchgangsöffnung kann ein Eindringen von Flüssigkeiten und Schmutz in das Gerät verhindert werden.

Es wird ein berührungsloser und kontaktloser Drehwahlschalter zur Bedienung eines Hausgerätes mittels kapazitiver Sensorflächen vorgestellt, wobei auf eine Durchgangsöffnung verzichtet werden kann.

Es wird ein Verfahren zum Messen einer Winkelstellung einer drehbaren Gebereinheit vorgestellt, wobei die Gebereinheit eine in einer Geberebene angeordnete Mittenelektrode und eine in der Geberebene angeordnete, mit der Mittenelektrode leitend verbundene und seitlich dazu versetzte Drehelektrode aufweist, wobei eine Sensoreinheit eine in einer Sensorebene angeordnete erste Sensorelektrode und zumindest eine in der Sensorebene angeordnete zweite Sensorelektrode aufweist, wobei die Sensorelektroden kreisförmig um eine in der Sensorebene angeordnete Masseelektrode angeordnet sind, wobei die Gebereinheit elektrisch isoliert von der Sensoreinheit ist, wobei die Geberebene und die Sensorebene im Wesentlichen parallel zueinander ausgerichtet sind, und die Mittenelektrode an der Masseelektrode ausgerichtet ist, und die Masseelektrode dazu ausgebildet ist, eine Kapazität der Mittenelektrode zu beeinflussen, wobei die Gebereinheit um die Mittenelektrode drehbar gelagert ist und die Drehelektrode im Bereich der Sensorelektroden auf einer Kreisbahn beweglich ist und dazu ausgebildet ist, entsprechend der Winkelstellung der Gebereinheit eine Kapazität zumindest einer der Sensorelektroden zu beeinflussen, wobei das Verfahren die folgenden Schritte aufweist:
Trennen der Masseelektrode von einem Massepotenzial;
Bestimmen eines, eine aktuelle Kapazität der ersten Sensorelektrode repräsentierenden ersten Referenzkapazitätswerts und zumindest eines, eine aktuelle Kapazität der zweiten Sensorelektrode repräsentierenden zweiten Referenzkapazitätswerts;
Verbinden der Masseelektrode mit dem Massepotenzial;
Bestimmen eines, eine aktuelle Kapazität der ersten Sensorelektrode repräsentierenden ersten Kapazitätswerts und zumindest eines, eine aktuelle Kapazität der zweiten Sensorelektrode repräsentierenden zweiten Kapazitätswerts;
Ermitteln eines, die Winkelstellung der Gebereinheit repräsentierenden Winkelwerts unter Verwendung der Referenzkapazitätswerte und der Kapazitätswerte.

Die Elektroden der Gebereinheit und der Sensoreinheit können flächig ausgeführt sein. Zwischen den Referenzkapazitätswerten und den Kapazitätswerten wird im Schritt des Ermittelns eine je Kapazitätsänderung pro Sensorelektrode ermittelt. An von der Drehelektrode beeinflussten Sensorelektroden ist die Kapazitätsänderung größer, als an den von der Drehelektrode unbeeinflussten Sensorelektroden. Wenn die Drehelektrode die erste Sensorelektrode und die zweite Sensorelektrode jeweils teilweise überdeckt, kann der Winkelwert aus einem Verhältnis der Kapazitätsänderungen ermittelt werden.

Die Schritte des Verfahrens können zyklisch wiederholt werden. Dadurch können veränderliche Umwelteinflüsse ausgefiltert werden, da die Kapazitätswerte jeweils unmittelbar auf die vorhergehend bestimmten Referenzkapazitätswerte bezogen werden. Ferner wird ein Drehwinkelsensor zum Messen einer Winkelstellung einer drehbaren Gebereinheit gemäß Anspruch 3 vorgestellt. Ferner wird ein Haushaltsgerät mit einem Drehwinkelsensor gemäß dem hier vorgestellten Ansatz vorgestellt, wobei die Sensorebene der Sensoreinrichtung auf einer Innenseite einer Bedienblende des Haushalsgeräts angeordnet ist und die Geberebene auf einer Außenseite der Bedienblende angeordnet ist, wobei die Gebereinrichtung mit einem Bedienelement des Haushaltsgeräts drehfest gekoppelt ist und auf der Außenseite drehbar gelagert ist, wobei eine Drehachse des Bedienelements mit den Mitten der Mittenelektrode und der Masseelektrode im Wesentlichen übereinstimmt und die Auswerteeinrichtung mit den Sensorelektroden und der Masseelektrode verbunden ist.

Die Sensorelektroden, die Masseelektrode, die Mittenelektrode und die Drehelektrode können als elektrisch leitfähige Flächen ausgebildet sein. Die Sensorelektroden und die Masseelektrode können als Folie ausgeführt sein.

Die Sensorelektroden können kreisringsegmentförmig geformt sein. Durch die Kreisringsegmentform können die Sensorelektroden eine Fläche eines Kreisrings vollständig abdecken. Dadurch kann der Winkelwert für jede Winkelstellung sicher ermittelt werden. Die Masseelektrode kann kreisförmig geformt sein. Die Masseelektrode kann den Innenkreis des Kreisrings der Sensorelektroden ausfüllen.

Die Sensoreinheit kann zumindest eine weitere in der Sensorebene angeordnete Sensorelektrode aufweisen. Bei drei Sensorelektroden kann der Winkelwert über einen Vollkreis ermittelt werden. Winkelstellung kann stufenlos ermittelt werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Der beschriebene Ansatz kann im Zusammenhang mit Haushaltsgeräten aus unterschiedlichen Produktgruppen eingesetzt werden, bei denen bisher eine Programmauswahl beziehungsweise Menüführung durch einen elektro-mechanischen Drehwahlschalter (DWS) erfolgt. Die Übertragung der Drehbewegung vom Drehwahlschalter in das Gehäuse durch eine gelagerte Welle auf ein Rastwerk und elektronische Komponenten zur Drehwinkelauswertung auf der Bedien- und Anzeigeelektronik (BAE) kann nun entfallen. Ebenso kann eine Durchgangsöffnung beziehungsweise Bohrung auf der Geräteblende entfallen. Dadurch können Fertigungskosten besonders bei Glasblenden von Kücheneinbaugeräten reduziert werden. Weiterhin entfallen Bindenähte bei gespritzten Kunststoffblenden und es wird das Eindringen von Flüssigkeiten und Schmutz verhindert, was weitere konstruktive Maßnahmen zum Ableiten der Flüssigkeiten unnötig macht, wodurch wiederum Kosten eingespart werden können.

Ein Ausführungsbeispiel der Erfindung ist in den Zeichnungen rein schematisch dargestellt und wird nachfolgend näher beschrieben. Es zeigt
- Figur 1: eine Darstellung eines Haushaltsgeräts mit einem Bedienelement;
- Figur 2: ein Blockschaltbild eines Drehwinkelsensors gemäß einem Ausführungsbeispiel;
- Figur 3: eine Darstellung eines Drehwinkelsensors mit Gebereinheit an einer Bedienblende;
- Figur 4: eine Schnittdarstellung eines Drehwinkelsensors mit Gebereinheit gemäß einem Ausführungsbeispiel;
- Figur 5: eine Darstellung eines Drehwinkelsensors gemäß einem Ausführungsbeispiel;
- Figur 6: ein Ersatzschaltbild eines Drehwinkelsensors gemäß einem Ausführungsbeispiel; und
- Figur 7: ein Ablaufdiagramm eines Verfahrens zum Messen einer Winkelstellung gemäß einem Ausführungsbeispiel.

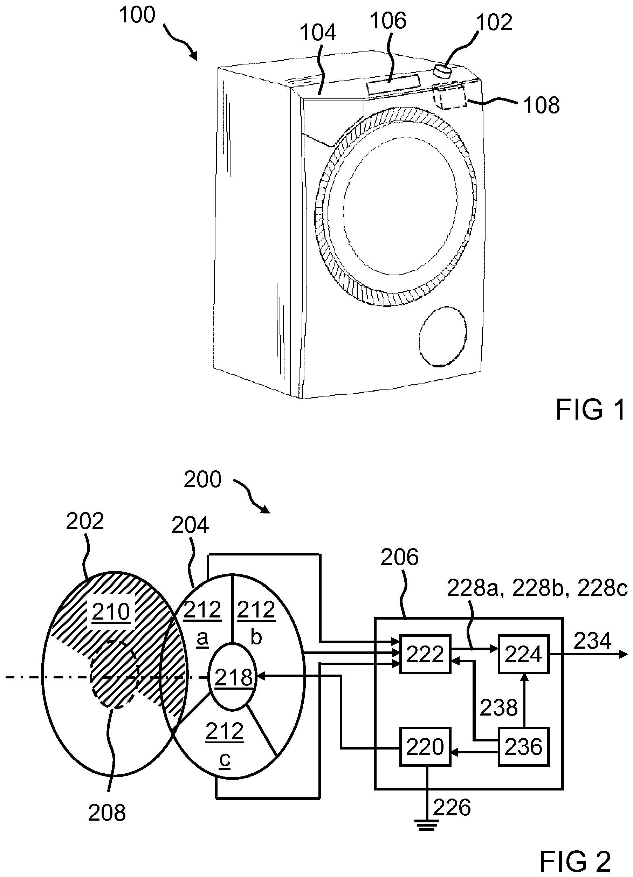

Figur 1 zeigt eine Darstellung eines Haushaltsgeräts 100 mit einem Bedienelement 102. Das Haushaltsgerät 100 ist hier ein Waschautomat 100 oder ein Wäschetrockner 100. Das Haushaltsgerät 100 kann beispielsweise auch ein Küchengerät, wie ein Herd oder ein Backofen sein. Das Haushaltsgerät 100 weist eine Bedienblende 104 auf. Die Bedienblende 104 ist Bestandteil einer Front des Haushaltsgeräts 100. Auf der Bedienblende 104 ist das Bedienelement 102 angeordnet. In die Bedienblende 104 ist ferner eine Anzeige 106 eingelassen. Das Bedienelement 102 ist ein Drehwahlschalter 102 zum Auswählen einer Betriebsart des Haushaltsgeräts 100. Der Drehwahlschalter 102 ist auf einer Außenseite der Bedienblende 104 angeordnet.

Hier wird eine Winkelstellung des Drehwahlschalters 102 durch einen Drehwinkelsensor gemäß dem hier vorgestellten Ansatz ausgelesen. Der Drehwahlschalter 102 ist drehfest mit einer Gebereinheit des Drehwinkelsensors gekoppelt. Die Bedienblende 104 weist im Bereich des Drehwahlschalters 102 kein Durchgangsloch auf. Auf einer Innenseite der Bedienblende 104 ist eine Sensoreinheit des Drehwinkelsensors angeordnet. Die Sensoreinheit ist der Gebereinheit gegenüberliegend angeordnet. Die Sensoreinheit ist mit einer Auswerteeinheit des Drehwinkelsensors verbunden. Das Auswerteelement ist Teil einer Steuerungselektronik 108 des Haushaltsgeräts 100. Die Steuerungselektronik 108 ist im Bereich der Bedienblende 104 innerhalb des Haushaltsgeräts 100 angeordnet.

Der hier vorgestellte Ansatz ermöglicht die berührungs- und kontaktlose Bestimmung einer Drehwinkelposition durch eine Geräteblende 104 mittels kapazitiven Sensorflächen. Durch eine Integration eines Rastwerks im Drehwahlschalter 102 kann auf eine Durchgangsöffnung in der Blende 104 verzichtet werden. Dadurch ist kein Eindringen von Flüssigkeiten oder Schmutz in das Gerät 100 möglich. Durch das Vermeiden der Durchgangsöffnung und der damit verbundenen zusätzlichen konstruktiven Maßnahmen können Fertigungskosten gesenkt werden. Zusätzlich zeichnet sich das hier vorgestellte kapazitive Auswertverfahren durch sehr kostengünstige System-Komponenten aus.

Figur 2 zeigt ein Blockschaltbild eines Drehwinkelsensors 200 gemäß einem Ausführungsbeispiel. Der Drehwinkelsensor 200 entspricht dabei im Wesentlichen dem in dem Haushaltsgerät in Figur 1 verbauten Drehwinkelsensor. Der Drehwinkelsensor 200 besteht aus drei Teilen, einer drehbaren Gebereinheit 202, einer Sensoreinheit 204 und einer Auswerteeinheit 206. Die Gebereinheit 202 ist dabei so ausgerichtet, dass seine Drehachse im Wesentlichen mit einer Mitte der Sensoreinheit 204 übereinstimmt.

Die Gebereinheit 202 und die Sensoreinheit 204 sind flächig ausgeführt. Dabei weisen die Gebereinheit 202 und die Sensoreinheit kreisförmige ähnliche Wirkflächen auf. Die Wirkflächen sind im Wesentlichen parallel zueinander ausgerichtet. Die Gebereinheit 202 weist eine Mittenelektrode 208 und eine Drehelektrode 210 auf. Die Mittenelektrode 208 und die Drehelektrode 210 sind hier Teilbereiche einer zusammenhängenden elektrisch leitfähigen Fläche. Die Mittenelektrode 208 ist rund und in der Mitte der Wirkfläche angeordnet. Die Drehelektrode 210 ist halbkreisringförmig um die Mittenelektrode 208 angeordnet. Die Sensoreinheit 204 weist drei Sensorelektroden 212a, 212b, 212c und eine Masseelektrode 218 auf. Die Sensorelektroden 212a, 212b, 212c sind als gleich große Sektoren eines Kreisrings ausgebildet. Dadurch erstreckt sich eine Sensorelektrode 212 über 120°. Die Masseelektrode 218 ist kreisförmig und in der Mitte des Kreisrings angeordnet. Die Masseelektrode 218 ist näherungsweise gleich groß, wie die Mittenelektrode 208. Die Elektroden 212, 218 sind als elektrisch leitfähige Flächen ausgebildet und voneinander elektrisch isoliert.

Die Auswerteeinheit 206 weist eine Schalteinrichtung 220, eine Bestimmungseinrichtung 222 und eine Ermittlungseinrichtung 224 auf. Die Schalteinrichtung 220 ist mit der Masseelektrode 218 verbunden. Die Bestimmungseinrichtung 222 ist mit den drei Sensorelektroden 212a, 212b, 212c verbunden. Die Ermittlungseinrichtung 224 ist mit der Bestimmungseinrichtung 222 verbunden. Die Schalteinrichtung 220 ist dazu ausgebildet, die Masseelektrode 218 mit einem Massepotenzial 226 zu verbinden oder die Masseelektrode 218 von dem Massepotenzial 226 zu trennen. Die Bestimmungseinrichtung 222 ist dazu ausgebildet eine aktuelle elektrische Kapazität der ersten Sensorfläche 212a zu bestimmen und in einem ersten Kapazitätswert 228a abzubilden, Ferner ist die Bestimmungseinrichtung 222 dazu ausgebildet, die aktuelle elektrische Kapazität der zweiten Sensorfläche 212b zu bestimmen und in einem zweiten Kapazitätswert 228b abzubilden. Weiterhin ist die Bestimmungseinrichtung dazu ausgebildet, die aktuelle elektrische Kapazität der dritten Sensorelektrode 212c zu bestimmen und in einem dritten Kapazitätswert 228c abzubilden. Die Ermittlungseinrichtung 224 ist dazu ausgebildet, unter Verwendung der Kapazitätswerte 228 einen Winkelwert 234 zu ermitteln. Dabei werden die elektrischen Kapazitäten einmal als Referenzkapazitäten bestimmt, wenn die Masseelektrode 218 mit dem Massepotenzial 226 getrennt ist und noch einmal als Arbeitskapazitäten bestimmt, wenn die Masseelektrode 218 von dem Massepotenzial 226 verbunden ist. Aus den in den jeweiligen Kapazitätswerten 228 abgebildeten Referenzkapazitäten und Arbeitskapazitäten ermittelt die Ermittlungseinrichtung 224 den, die Winkelstellung der Gebereinheit 202 repräsentierenden Winkelwert 234.

In einem Ausführungsbeispiel weist die Auswerteeinheit 206 eine Steuereinrichtung 236 auf. Die Steuereinrichtung 236 ist mit der Schalteinrichtung 220 und der Bestimmungseinrichtung 222 sowie der Ermittlungseinrichtung 224 verbunden. Die Steuereinrichtung 236 ist dazu ausgebildet, unter Verwendung von Steuersignalen 238 das Messen des Drehwinkels anzusteuern. Dazu werden die Einrichtungen 220, 222, 224 in einer zyklischen Steuersequenz angesteuert. Innerhalb eines Zyklus wird die Masseelektrode 218 von dem Massepotenzial 226 getrennt. Anschließend werden die Kapazitäten der Sensorelektroden 212 als Referenzkapazitätswerte 228 bestimmt und in der Ermittlungseinrichtung hinterlegt. Dann wird die Masseelektrode 218 mit dem Massepotenzial 226 verbunden. Anschließend werden die Kapazitäten der Sensorelektroden 212 als Kapazitätswerte 228 bestimmt. Unter Verwendung der hinterlegten Referenzkapazitätswerte 228 und der Kapazitätswerte 228 wird eine Kapazitätsdifferenz pro Sensorelektrode 212 ermittelt. Die Sensorelektrode 212, die am stärksten durch die Drehelektrode 210 überdeckt ist, weist die größte Kapazitätsdifferenz auf. Die Sensorelektrode 212, die am wenigsten durch die Drehelektrode überdeckt ist, weist die kleinste Kapazitätsdifferenz auf. Aus einem Verhältnis der Kapazitätsdifferenzen kann also auf die Winkelstellung der Gebereinheit 202 geschlossen werden.

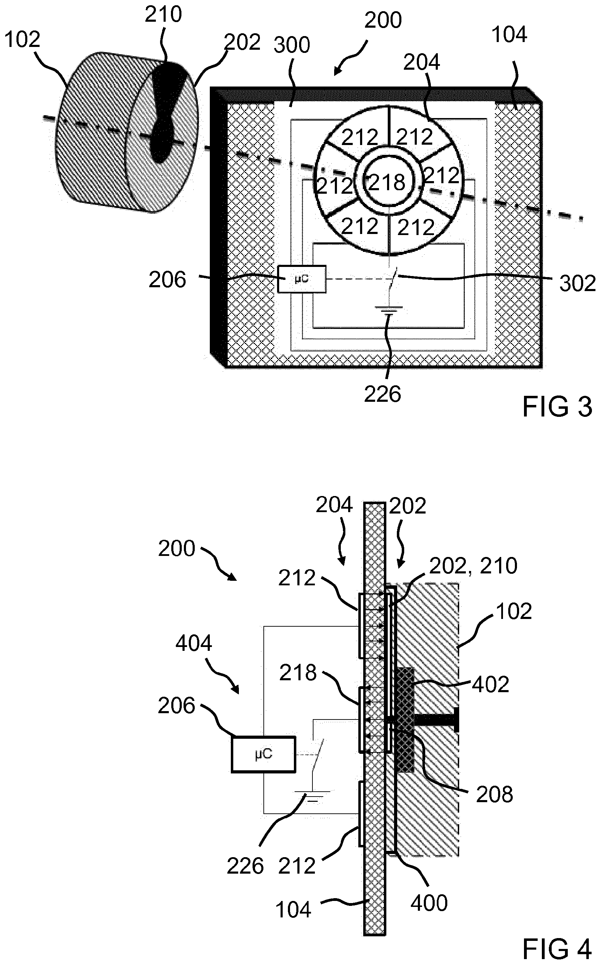

Die Bestimmung der Drehwinkelposition erfolgt über kapazitive Sensorflächen 212 und einem Auswerteverfahren, wie es beispielsweise bei Touch-Slidern angewendet werden kann. Der für die kapazitive Auswertung nötige Potenzialunterschied, der üblicherweise durch das Annähern/Berühren eins menschlichen Fingers hervorgerufen wird, wird durch die gegen Masse 226 gekoppelte Rotor-Elektrode 202 erzeugt. Bei der Rotor-Elektrode 202 handelt es sich um eine bestimmte geometrische Form aus leitfähigem Material, wie Kupfer, das flächig mit nicht leitfähigem Material umgeben ist. Diese Rotor-Elektrode 202 kann zusammen mit einem dem Rastwerk im Drehwahlschalter integriert werden und bildet so eine kompakte Baugruppe, die von außen auf der Geräteblende montiert werden kann. Bei einer rotatorischen Bewegung des Drehwahlschalters 200 wird auch die Rotor-Elektrode 202 gedreht. Diese überdeckt je nach Drehwinkelstellung unterschiedliche Sensorflächen 212 und beeinflusst so deren Kapazität. Die Anordnung der Sensorflächen 212 hinter der Geräteblende ist beispielhaft in Figur 3 dargestellt. Eine Massefläche 218 in der Mitte, sechs Sensorflächen 212 beziehungsweise Stator-Elektroden 212 rotationssymmetrisch in einem Kreisring um die Mitte angeordnet. Diese Konfiguration ist beispielsweise auf ein sehr einfaches Erkennen von 12 Raststellungen/Programmen ausgelegt. Für eine andere Anzahl an Raststellungen kann die Anzahl der Sensorflächen 212 angepasst werden.

Die absolute Drehwinkelposition kann durch den hier vorgestellten Ansatz nach einem Geräteneustart bestimmt werden. Zum Bestimmen der Drehwinkelposition wird die mittlere Massefläche 218 zyklisch umkonfiguriert und die Sensorflächen 212 werden zyklisch initialisiert. Das Umschalten der Massefläche 218 zwischen den zwei Konfigurationszuständen "hochohmiger Eingang" und "Massepotenzial beziehungsweise Ground" führt über die kapazitive Kopplung der Rotor-Elektrode 202 zu einer messbaren Kapazitätsänderung der überdeckten Sensorfläche 212. Durch das gleichzeitige Initialisieren der Sensorflächen 212 im Zustand "hochohmiger Eingang" wird nur der Potenzialunterschied durch das Umkonfigurieren auf "Ground" gemessen. Alle störenden Umgebungsbedingungen, wie beispielsweise das Annähern einer menschlichen Hand an den Drehwahlschalter oder Temperaturdrifts, werden so herausgefiltert.

Figur 3 zeigt eine Darstellung eines Drehwinkelsensors 200 mit Gebereinheit 202 an einer Bedienblende 104 eines Haushaltsgeräts. Der Drehwinkelsensor 200 entspricht im Wesentlichen dem Drehwinkelsensor in Figur 2. Die Sensoreinheit 204 des Drehwinkelsensors 200 weist hier im Gegensatz zu Figur 2 sechs Sensorelektroden 212 auf. Die Sensorelektroden 212 sind als gleich große Kreisringsektoren ausgebildet. Die Auswerteeinheit 206 ist hier ein Mikrocontroller 206. Der Mikrocontroller 206 ist mit der Sensoreinheit 204 auf einem gemeinsamen Träger 300 angeordnet. Der Träger 300 ist an einer Innenseite der Bedienblende 104 angeordnet. Dabei ist der Träger 300 insbesondere auf die Bedienblende aufgeklebt, um einen Luftspalt zwischen den Sensorelektroden 212 und der Bedienblende 104 zu vermeiden.

Die Schalteinrichtung des Mikrocontrollers 206 ist über eine Steuerleitung mit einem Schalter 302 beziehungsweise Relais 302 verbunden. Der Schalter 302 verbindet oder trennt die Masseelektrode 218 entsprechend seiner Schaltstellung von dem Massepotenzial 226. Die Gebereinheit 202 ist einstückig mit einem Drehwahlschalter 102 des Hausgeräts verbunden. Dabei entspricht eine Form der Drehelektrode 210 im Wesentlichen der Form einer Sensorelektrode 212 in Verbindung mit der Masseelektrode 218.

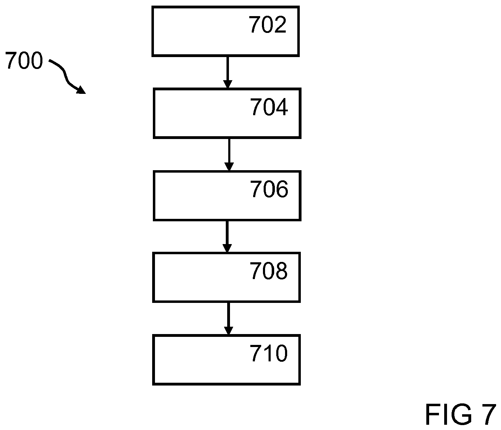

Das durch die, auch als Rotor-Elektrode 202 bezeichenbare Gebereinheit 202 erzeugte Potenzial über einer Sensorfläche 212 ermöglicht die Bestimmung der Drehwinkelstellung des Bedienelementes 102. Kapazitive Auswerteverfahren beruhen auf einer relativen Änderung der Kapazität. Bei dem hier vorgestellten Ansatz wird ein spezielles Messverfahren, wie es beispielsweise in Figur 7 beschrieben ist, angewendet. Dadurch ist eine absolute Bestimmung der Drehwinkelstellung möglich, ohne dass das Bedienelement 202 berührt oder gedreht werden muss. Ansonsten wäre eine Bestimmung der Drehwinkelstellung erst nach einmaligem Verdrehen der Bedieneinrichtung 202 möglich, da dieses zu einer relativen Kapazitätsänderung an den Sensorflächen 212 führt.

Der Messzyklus beginnt mit der Konfiguration der Massefläche 218 als hochohmiger Eingang am Mikrocontroller 206. Diese Konfiguration kommt einem geöffneten Schalter 302 zwischen der Massefläche 218 und dem Massepotenzial 226 gleich. Anschließend werden die Kapazitäten aller Sensorflächen 212 nacheinander gemessen und als Referenzwerte gespeichert. Es folgt die Umkonfiguration der Massefläche 218. Statt als hochohmiger Eingang wird diese nun als Ausgang konfiguriert und auf das Massepotential 226 geschaltet. Diese Konfiguration kommt einem geschlossenen Schalter 302 zwischen Massefläche 218 und dem Massepotenzial 226 gleich. Über die Rotor-Elektrode 202 wird dieses Massepotenzial 226 auf mindestens eine der Sensorflächen 212 gekoppelt und vergrößert so die Kapazität dieser Sensorfläche 212. Die Kapazitäten aller Sensorflächen 212 werden erneut gemessen und mit den vorher gespeicherten Referenzwerten verglichen. Eine durch die Rotor-Elektrode 202 überdeckte Sensorfläche 212 weist dabei eine deutlich größere Kapazitätsveränderung auf, als eine nicht überdeckte Sensorfläche 212. Die absolute Drehwinkelstellung des Bedienelementes 102 kann so bestimmt werden. Der Messzyklus wird fortlaufend ausgeführt und beginnt mit der Umkonfiguration der Massefläche 218 als hochohmiger Eingang und der Referenzwertbildung der Sensorkapazitäten von Neuem.

Neben der absoluten Bestimmung der Drehwinkelstellung liegt ein weiterer Vorteil dieses Messverfahrens in der Robustheit des Systems. Sämtliche Veränderungen der Umgebungsbedingungen, wie Temperatur, Feuchtigkeit, Alterung, Annähern eines leitfähigen Objektes, wie einer Hand, können durch das wiederholende Initialisieren der Sensorflächen 212 in jedem Messzyklus, kompensiert werden.

Figur 4 zeigt eine Schnittdarstellung eines Drehwinkelsensors 200 mit Gebereinheit 202 gemäß einem Ausführungsbeispiel. Der Drehwinkelsensor 200 entspricht dabei im Wesentlichen dem Drehwinkelsensor in Figur 3. Hier ist die Gebereinheit 202 in einer Haltevorrichtung 400 gelagert, die mit der Außenseite der Bedienblende 104 verbunden ist. An der Haltevorrichtung 400 ist ein Rastwerk 402 befestigt. Das Rastwerk 402 gibt diskrete Winkelpositionen für die Gebereinheit 202 vor. Mit anderen Worten rastet die Gebereinheit 202 in diskreten Winkelstellungen in dem Rastwerk 402 ein.

Die Sensorelektroden 212 und die Masseelektrode 218 sind hier unmittelbar auf der Innenseite der Bedienblende 104 angeordnet. Hier ist dargestellt, wie sich die Elektroden der Sensoreinheit 204 und der Gebereinheit 202 gegenseitig beeinflussen. Dabei beeinflusst die Drehelektrode 210 eine elektrische Kapazität jeweils einer oder mehrerer der Sensorelektroden 212. Die Masseelektrode 218 beeinflusst die elektrische Kapazität der Mittenelektrode 208, die wiederum die Drehelektrode 210 beeinflusst, da sie elektrisch leitend miteinander verbunden sind.

Um eine möglichst starke Beeinflussung zu erreichen, ist die Gebereinheit 202 so nah, wie möglich an der Außenseite der Bedienblende 104 angeordnet.

Die Auswerteeinheit 206 ist hier von der Sensoreinheit 204 abgesetzt auf einer eigenen Leiterplatte 404 angeordnet.

An der Rückseite der Bedienblende 104 eines Haushaltsgerätes, beispielsweise einer Waschmaschine, befindet sich eine Mehrzahl an Sensorflächen 212, die rotationssymmetrisch um eine mittlere Massefläche 218 angeordnet sind. Die einzelnen Sensorflächen 212 bilden so Sektoren eines Kreisrings. Alle Flächen 212, 214 sind galvanisch voneinander getrennt und bestehen aus elektrisch leitfähigem Material. Die Sensorflächen 212 können beispielsweise aus Kupfer auf PCB oder als Leitdruck oder als verklebte Leitfolien direkt auf der Bedienblende 104 ausgeführt sein. Ein Bedienelement 102 gleich dem Drehwahlschalter 102 ist auf der Vorderseite der Bedienblende 104 zentriert über den Sensorflächen 212 drehbar angeordnet. Das Bedienelement 102 besteht aus einem elektrisch isolierenden Basiskörper, der als Zylinderteil geformt ist. Der Basiskörper besitzt ein elektrisch leitfähiges Element 202, z.B. aus Kupfer, das als Rotor-Elektrode 202 bezeichnet werden kann. Die Rotor-Elektrode 202 ist auf der bedienblenden-zugewandten Seite des Bedienelementes 102 angebracht und besitzt eine Geometrie 210, die der der Massefläche 218 und einem Kreisringsektor 212 entspricht. Es wird so immer die Massefläche 218 und abhängig von der Drehwinkelstellung wenigstens eine der Sensorflächen 212 überdeckt.

Alle Flächen 212, 218 sind mit einer Auswertelektronik 206, hier ein Mikrocontroller (µC) 206, elektrisch verbunden. Über gängige Auswerteverfahren können die Kapazitäten der Sensorflächen 212 gegen Massepotenzial 226 gemessen werden. Die Überdeckung einer Sensorfläche 212 durch die Rotor-Elektrode 202 führt zu einer Veränderung des kapazitiven Nahfeldes und somit zu einer Kapazitätsänderung dieser Sensorfläche 212. Die Größe der Kapazitätsveränderung ist dabei abhängig vom Grad der Überdeckung. Der Einfluss der Rotor-Elektrode 202 auf die Kapazität einer Sensorfläche 212 beruht auf der kapazitiven Kopplung zum Massepotenzial 226 der mittleren Massefläche 218. Bei Sensor-Touch-Anwendungen kann dieses Massepotenzial durch die Annäherung eines menschlichen Fingers erzeugt werden.

Der Abstand zwischen dem Bedienelement 102 und der Bedienblende 104 kann je nach konstruktiver Umsetzung zwischen einem schleifenden Aufliegen und einem Abstand von wenigen zehntel Millimeter variiert werden. Der maximal mögliche Abstand, bei dem sich die kleinste noch sicher auswertbare Kapazitätsänderung ergibt, ist abhängig vom verwendeten Blendenmaterial, der Materialstärke und dem Flächeninhalt der Sensor- und Masseflächen 212, 218. Dabei ist die relative Permittivität entscheidend. Die Bedienblende 104 kann beispielsweise aus gängigen Materialien wie Kunststoffe oder Glas sein. Aufgrund der geringen relativen Permittivität von Luft ist für eine maximale Kapazitätsänderung ein minimaler Abstand zwischen Bedienelement 102 und Bedienblende 104 anzustreben. Daher sind auch die Sensor- und Masseflächen 212, 218 auf der Rückseite der Bedienblende 104 direkt und ohne Luftspalt angebracht. Die Sensorflächen 212 sind in Geometrie und Flächeninhalt identisch. Die Massefläche 218 sollte den gleichen Flächeninhalt besitzen wie eine Sensorfläche 212. Eine maximale Größe der Flächen wird durch den zur Verfügung stehenden Bauraum im Bedienelement 102 vorgegeben. In einem Ausführungsbeispiel weisen die sechs Sensorflächen 212 mit einem Außendurchmesser von 40 mm einen Flächeninhalt jeder Fläche von 133 mm² auf.

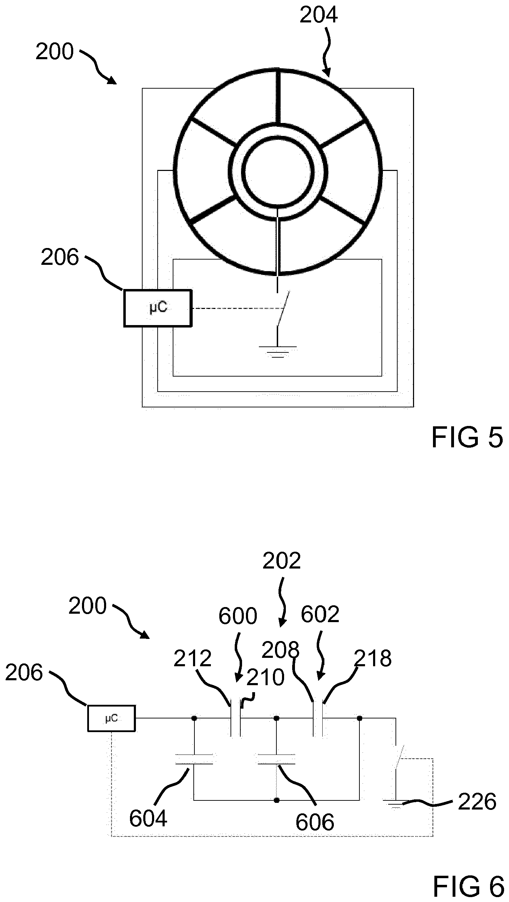

Figur 5 zeigt eine Darstellung eines Drehwinkelsensors 200 gemäß einem Ausführungsbeispiel. Der Drehwinkelsensor 200 entspricht im Wesentlichen dem Drehwinkelsensor in Figur 3. Im Gegensatz zu Figur 3 sind die Sensoreinheit 204 und die Auswerteeinheit 206 nicht auf dem gemeinsamen Träger angeordnet.

Die Sensorflächen 212 beziehungsweise Stator-Elektroden 212 sind aus leitfähigem Material gefertigt und sind gegeneinander isoliert. Denkbar sind Ausführungen als Folie, die von hinten auf die Geräteblende geklebt wird oder auch als gedruckte Leitschicht auf Glasblenden. Die Rotor-Elektrode ist ebenfalls aus leitfähigem Material, das flächig von nicht leitfähigem Material umgeben ist.

Der hier vorgestellte Ansatz bietet den Vorteil, dass durch eine berührungslose Drehwinkelbestimmung keine Durchgangsöffnung auf der Geräteblende benötigt wird. Es kann so das Eindringen von Flüssigkeiten und Schmutz verhindert werden, gleichzeitig werden die Fertigungs- und Bauteilkosten gesenkt. Die Modifikation der mittleren Massefläche ermöglicht die absolute Drehwinkelbestimmung auch nach einem Geräteneustart ohne das der Drehwahlschalter berührt oder gedreht werden muss.

Der hier vorgestellte Ansatz kann an Geräten eingesetzt werden, bei denen Drehwahlschalter im Bedienkonzept vorgesehen sind. Dabei ist abhängig vom Material der Blende, wie Kunststoff oder Glas, die maximal mögliche Materialstärke zu berücksichtigen, die eine sichere Erkennung zulässt.

Figur 6 zeigt ein Ersatzschaltbild eines Drehwinkelsensors 200 gemäß einem Ausführungsbeispiel. In dem Ersatzschaltbild ist eine Reihenschaltung aus der Auswerteeinheit 206, einer ersten Kapazität 600, einer zweiten Kapazität 602 und dem Massepotenzial 226 dargestellt. Die erste Kapazität ist durch eine einzelne Sensorelektrode 212 und die Drehelektrode 210 ausgebildet. Die zweite Kapazität 602 ist durch die Mittenelektrode 208 und die Masseelektrode 218 ausgebildet. Das Massepotenzial 226 wird durch die Schalteinrichtung auf die Masseelektrode 218 geschaltet.

Zwischen der Auswerteeinheit 206 und der ersten Kapazität 600 greift eine erste parasitäre Kapazität 604 an. An der Gebereinheit 202 greift eine zweite parasitäre Kapazität 606 an. Die parasitären Kapazitäten 604, 606 repräsentieren beispielsweise Umgebungseinflüsse. Die parasitären Kapazitäten 604, 606 sind einseitig mit der Masseelektrode 218 verbunden.

Das Ersatzschaltbild in Figur 6 verdeutlicht, dass sich aus der Sicht der Auswerteelektronik 206 eine Reihenschaltung der relevanten Kapazitäten C_{S} und C_{M} 600, 602 gegen das Massepotenzial 226 ergibt. Dabei ist C_{S} 600 die Kapazität zwischen Sensorfläche 212 und der Rotor-Elektrode 202 und C_{M} 602 die Kapazität zwischen der Rotor-Elektrode 202 und der Massefläche 218. Cₚₐᵣ₁ und Cₚₐᵣ₂ 604, 606 sind störende Einflüsse durch parasitäre Kapazitäten.

Figur 7 zeigt ein Ablaufdiagramm eines Verfahrens 700 zum Messen einer Winkelstellung gemäß einem Ausführungsbeispiel. Eine Problematik bei der Anwendung kapazitiver Auswertverfahren in Kombination mit einer Rotor-Elektrode besteht in der Bestimmung der absoluten Drehwinkelposition nach dem Einschalten eines Gerätes und ohne Berühren des Drehwahlschalters. Bekannte Auswerteverfahren beruhen auf einer relativen Kapazitätsänderung. Wird das Gerät eingeschaltet, werden die Sensorflächen initialisiert und deren Kapazität gemessen. Erfolgt keine Drehwinkeländerung oder Berührung des Drehwahlschalters, ist auch keine Kapazitätsänderung an den Sensorflächen messbar. Es ist somit keine Bestimmung der Drehwinkelposition möglich. Der hier vorgestellte Ansatz beschreibt ein Verfahren 700, das dieses Problem löst. Das Verfahren 700 kann an einem Winkelsensor, wie er in den vorhergehenden Figuren dargestellt ist, ausgeführt werden. Das Verfahren 700 weist einen Schritt 702 des Trennens, einen Schritt 704 des Bestimmens, einen Schritt 706 des Verbindens, einen weiteren Schritt 708 des Bestimmens und einen Schritt 710 des Ermittelns auf. Im Schritt 702 des Trennens wird eine Masseelektrode des Winkelsensors von einem Massepotenzial getrennt. Im Schritt 704 des Bestimmens werden aktuelle elektrische Kapazitäten von Sensorelektroden des Winkelsensors in Referenzkapazitätswerten abgebildet. Im Schritt 706 des Verbindens wird die Masseelektrode mit dem Massepotenzial verbunden. Im weiteren Schritt 708 des Bestimmens werden die aktuellen Kapazitäten der Sensorelektroden in Kapazitätswerten abgebildet. Im Schritt 710 des Ermittelns wird ein, die Winkelstellung repräsentierender Winkelwert unter Verwendung der Referenzkapazitätswerte und der Kapazitätswerte ermittelt.

Mit anderen Worten wird eine kontaktlose Drehwinkelbestimmung durch die Bedienblende eines Haushaltsgerätes vorgestellt.

Dadurch, dass die absolute Drehwinkelposition auch ohne Berühren des Drehwahlschalters bestimmt werden kann, ergibt sich eine weitere denkbare Anwendung für dieses Verfahren 700. Aufgrund der in vielen Geräten bereits vorhandenen Touch-Controller und den sehr günstigen System-Komponenten könnte die beschreibende kapazitive Drehwinkelbestimmung auch in Verbindung mit einer Durchgangsöffnung als verschleißarmer Ersatz für die bestehenden Auswerteverfahren direkt auf der Bedien- und Anzeigeelektronik genutzt werden. Auf der Bedien- und Anzeigeelektronik können die Sensorflächen kostengünstig direkt als Leitstruktur geätzt werden. Die Rotor-Elektrode kann über eine geeignete Führung mit einem Luftspalt von wenigen zehntel Millimeter über den Sensorflächen gelagert sein. Erfolgt eine Drehung am Drehwahlschalter, wird diese Drehwinkeländerung über die Welle und die Durchgangsöffnung auf die gelagerte Rotor-Elektrode übertragen. Wie bereits beschrieben, ändert sich die Überdeckung der Sensorflächen, wodurch eine absolute Drehwinkelbestimmung ermöglicht wird.

## Patentansprüche

1. Verfahren (700) zum Messen einer Winkelstellung einer drehbaren Gebereinheit (202) unter Verwendung einer von der Gebereinheit (202) elektrisch isolierten Sensoreinheit (204), wobei die Gebereinheit (202) eine in einer Geberebene angeordnete Mittenelektrode (208) und eine in der Geberebene angeordnete, mit der Mittenelektrode (208) leitend verbundene und seitlich dazu versetzte Drehelektrode (210) aufweist, wobei die Sensoreinheit (204) eine in einer Sensorebene angeordnete erste Sensorelektrode (212a) und zumindest eine in der Sensorebene angeordnete zweite Sensorelektrode (212b) aufweist, wobei die Sensorelektroden (212) kreisförmig um eine in der Sensorebene angeordnete Masseelektrode (218) angeordnet sind, wobei die Geberebene und die Sensorebene im Wesentlichen parallel zueinander ausgerichtet sind, die Gebereinheit (202) um die Mittenelektrode (208) drehbar gelagert ist, die Drehelektrode (210) im Bereich der Sensorelektroden (212) auf einer Kreisbahn beweglich ist, und die Mittenelektrode (208) an der Masseelektrode (218) ausgerichtet ist, und wobei die Masseelektrode (218) dazu ausgebildet ist, eine Kapazität der Mittenelektrode (208) zu beeinflussen, und wobei die Drehelektrode (210) dazu ausgebildet ist, entsprechend der Winkelstellung der Gebereinheit (202) eine Kapazität zumindest einer der Sensorelektroden (212) zu beeinflussen, und wobei das Verfahren (700) die folgenden Schritte umfasst:
Trennen (702) der Masseelektrode (218) von einem Massepotenzial (226) mittels eines Schalters (302);
Bestimmen (704) eines eine aktuelle Kapazität der ersten Sensorelektrode (212a) repräsentierenden ersten Referenzkapazitätswerts (228a) und zumindest eines eine aktuelle Kapazität der zweiten Sensorelektrode (212b) repräsentierenden zweiten Referenzkapazitätswerts (228b);
Verbinden (706) der Masseelektrode (218) mit dem Massepotenzial (226) mittels des Schalters (302);
Bestimmen (708) eines eine aktuelle Kapazität der ersten Sensorelektrode (212a) repräsentierenden ersten Kapazitätswerts (228a) und zumindest eines eine aktuelle Kapazität der zweiten Sensorelektrode (212b) repräsentierenden zweiten Kapazitätswerts (228b);
Ermitteln (710) eines die Winkelstellung der Gebereinheit (202) repräsentierenden Winkelwerts (234) unter Verwendung der Referenzkapazitätswerte (228) und der Kapazitätswerte (228).

2. Verfahren gemäß Anspruch 1, bei dem die Schritte des Verfahrens (700) zyklisch wiederholt werden.

3. Drehwinkelsensor (200) zum Messen einer Winkelstellung einer drehbaren Gebereinheit, wobei der Drehwinkelsensor (200) die folgenden Merkmale aufweist:
eine Gebereinheit (202), die eine in einer Geberebene angeordnete Mittenelektrode (208) und eine in der Geberebene angeordnete, mit der Mittenelektrode (208) leitend verbundene und seitlich dazu versetzte Drehelektrode (210) aufweist;
eine Sensoreinheit (204), die eine in einer Sensorebene angeordnete erste Sensorelektrode (212a) und zumindest eine in der Sensorebene angeordnete zweite Sensorelektrode (212b) aufweist, wobei die Sensorelektroden (212) kreisförmig um eine in der Sensorebene angeordnete Masseelektrode (218) angeordnet sind, wobei eine Mitte der Masseelektrode (218) eine Mitte der Mittenelektrode (208) vorgibt; und
eine Auswerteeinheit (206), die mit den Sensorelektroden (212) und der Masseelektrode (218) sowie über eine Steuerleitung mit einem Schalter (302) verbunden ist, und die ausgebildet ist zum Trennen (702) der Masseelektrode (218) von einem Massepotenzial (226) mittels des Schalters (302);
Bestimmen (704) eines eine aktuelle Kapazität der ersten Sensorelektrode (212a) repräsentierenden ersten Referenzkapazitätswerts (228a) und zumindest eines eine aktuelle Kapazität der zweiten Sensorelektrode (212b) repräsentierenden zweiten Referenzkapazitätswerts (228b);
Verbinden (706) der Masseelektrode (218) mit dem Massepotenzial (226) mittels des Schalters (302);
Bestimmen (708) eines eine aktuelle Kapazität der ersten Sensorelektrode (212a) repräsentierenden ersten Kapazitätswerts (228a) und zumindest eines eine aktuelle Kapazität der zweiten Sensorelektrode (212b) repräsentierenden zweiten Kapazitätswerts (228b); und Ermitteln (710) eines die Winkelstellung der Gebereinheit (202) repräsentierenden Winkelwerts (234) unter Verwendung der Referenzkapazitätswerte (228) und der Kapazitätswerte (228).

4. Drehwinkelsensor (200) nach Anspruch 3, wobei die Sensorelektroden (212) kreisringsegmentförmig geformt sind.

5. Drehwinkelsensor (200) nach Anspruch 3 oder 4, wobei die Masseelektrode (218) kreisförmig geformt ist.

6. Drehwinkelsensor (200) nach Anspruch 3, 4 oder 5, mit zumindest einer weiteren in der Sensorebene angeordneten Sensorelektrode (212).

7. Haushaltsgerät (100) mit einem Drehwinkelsensor (200) gemäß einem der Ansprüche 3 bis 6, wobei die Sensorebene der Sensoreinrichtung (204) auf einer Innenseite einer Bedienblende (104) des Haushalsgeräts (100) angeordnet ist und die Geberebene auf einer Außenseite der Bedienblende (104) angeordnet ist, wobei die Gebereinrichtung (202) mit einem Bedienelement (102) des Haushaltsgeräts (100) drehfest gekoppelt ist und auf der Außenseite drehbar gelagert ist, wobei eine Drehachse des Bedienelements (102) mit den Mitten der Mittenelektrode (208) und der Masseelektrode (210) im Wesentlichen übereinstimmt und die Auswerteeinrichtung (206) mit den Sensorelektroden (212) und der Masseelektrode (218) verbunden ist.

8. Haushaltsgerät (100) nach Anspruch 7, wobei das Bedienelement ein Drehwahlschalter (102) ist und aus einem elektrisch isolierenden Basiskörper besteht, der als Zylinderteil geformt ist, und wobei die Gebereinrichtung (202) auf der bedienblenden-zugewandten Seite des Bedienelementes (102) angebracht ist.

9. Computer-Programmprodukt mit Programmcode zur Durchführung des Verfahrens (700) nach einem der Ansprüche 1 oder 2, wenn das Computer-Programmprodukt auf einer Vorrichtung ausgeführt wird.

## Claims

1. Method (700) for measuring an angular position of a rotatable transmitter unit (202) using a sensor unit (204) that is electrically insulated from the transmitter unit (202), wherein the transmitter unit (202) comprises a central electrode (208), which is arranged in a transmitter plane, and a rotary electrode (210), which is arranged in the transmitter plane, is conductively connected to the central electrode (208), and is laterally offset thereto, wherein the sensor unit (204) comprises a first sensor electrode (212a), which is arranged in a sensor plane, and at least one second sensor electrode (212b), which is arranged in the sensor plane, wherein the sensor electrodes (212) are arranged in a circle around an earth electrode (218) arranged in the sensor plane, wherein the transmitter plane and the sensor plane are oriented so as to be substantially mutually parallel, the transmitter unit (202) is mounted so as to be rotatable about the central electrode (208), the rotary electrode (210) is movable on a circular path in the region of the sensor electrodes (212), and the central electrode (208) is aligned with the earth electrode (218), and wherein the earth electrode (218) is designed to affect a capacitance of the central electrode (208), and wherein the rotary electrode (210) is designed to affect a capacitance at least of one of the sensor electrodes (212) according to the angular position of the transmitter unit (202), and wherein the method (700) comprises the following steps:
isolating (702) the earth electrode (218) from an earth potential (226) by means of a switch (302);
determining (704) a first reference capacitance value (228a), which represents a current capacitance of the first sensor electrode (212a), and at least one second reference capacitance value (228b), which represents a current capacitance of the second sensor electrode (212b);
connecting (706) the earth electrode (218) to the earth potential (226) by means of the switch (302);
determining (708) a first capacitance value (228a), which represents a current capacitance of the first sensor electrode (212a), and at least one second capacitance value (228b), which represents a current capacitance of the second sensor electrode (212b);
identifying (710) an angular value (234), which represents the angular position of the transmitter unit (202), using the reference capacitance values (228) and the capacitance values (228).

2. Method according to claim 1, wherein the steps of the method (700) are cyclically repeated.

3. Rotational-angle sensor (200) for measuring an angular position of a rotatable transmitter unit, wherein the rotational-angle sensor (200) comprises the following features: a transmitter unit (202), which comprises a central electrode (208), which is arranged in a transmitter plane, and a rotary electrode (210), which is arranged in the transmitter plane, is conductively connected to the central electrode (208), and is laterally offset thereto; a sensor unit (204), which comprises a first sensor electrode (212a) arranged in a sensor plane and at least one second sensor electrode (212b) arranged in the sensor plane, wherein the sensor electrodes (212) are arranged in a circle around an earth electrode (218) arranged in the sensor plane, wherein a centre of the earth electrode (218) predetermines a centre of the central electrode (208); and an evaluation unit (206), which is connected to the sensor electrodes (212) and the earth electrode (218) and is connected to a switch (302) via a control line, and is designed to isolate (702) the earth electrode (218) from an earth potential (226) by means of the switch (302);
determining (704) a first reference capacitance value (228a), which represents a current capacitance of the first sensor electrode (212a), and at least one second reference capacitance value (228b), which represents a current capacitance of the second sensor electrode (212b); connecting (706) the earth electrode (218) to the earth potential (226) by means of the switch (302);
determining (708) a first capacitance value (228a), which represents a current capacitance of the first sensor electrode (212a), and at least one second capacitance value (228b), which represents a current capacitance of the second sensor electrode (212b); and
identifying (710) an angular value (234), which represents the angular position of the transmitter unit (202), using the reference capacitance values (228) and the capacitance values (228).

4. Rotational-angle sensor (200) according to claim 3, wherein the sensor electrodes (212) are in the form of circle segments.

5. Rotational-angle sensor (200) according to either claim 3 or claim 4, wherein the earth electrode (218) is circular.

6. Rotational-angle sensor (200) according to claim 3, claim 4 or claim 5, comprising at least one additional sensor electrode (212) arranged in the sensor plane.

7. Domestic appliance (100) comprising a rotational-angle sensor (200) according to any of claims 3 to 6, wherein the sensor plane of the sensor device (204) is arranged on an inner face of a control panel (104) of the domestic appliance (100), and the transmitter plane is arranged on an outer face of the control panel (104), wherein the transmitter device (202) is non-rotatably coupled to a control element (102) of the domestic appliance (100) and is rotatably mounted on the outer face, wherein an axis of rotation of the control element (102) substantially corresponds to the centres of the central electrode (208) and the earth electrode (210), and the evaluation device (206) is connected to the sensor electrodes (212) and the earth electrode (218).

8. Domestic appliance (100) according to claim 7, wherein the control element is a rotary selector switch (102) and consists of an electrically insulating base body which is in the form of a cylinder part, and wherein the transmitter device (202) is attached on the side of the control element (102) that faces the control panel.

9. Computer-program product comprising a program code for carrying out the method (700) according to either claim 1 or claim 2, when the computer-program product is run on a device.

## Revendications

1. Procédé (700) pour la mesure d'une position angulaire d'une unité de transmission rotative (202) en utilisant une unité de détection (204) isolée électriquement de l'unité de transmission (202), dans lequel l'unité de transmission (202) présente une électrode centrale (208) disposée dans un plan de transmission et une électrode rotative (210) disposée dans le plan de transmission, reliée à l'électrode centrale (208) de manière conductrice et décalée latéralement par rapport à celle-ci, dans lequel l'unité de détection (204) présente une première électrode de détection (212a) disposée dans un plan de détection et au moins une deuxième électrode de détection (212b) disposée dans le plan de détection, dans lequel les électrodes de détection (212) sont disposées de manière circulaire autour d'une électrode de terre (218) disposée dans le plan de détection, dans lequel le plan de transmission et le plan de détection sont orientés sensiblement parallèlement entre eux, l'unité de transmission (202) est montée de manière rotative autour de l'électrode centrale (208), l'électrode rotative (210) est mobile dans la zone des électrodes de détection (212) sur une piste circulaire, et l'électrode centrale (208) est orientée vers l'électrode de terre (218), et dans lequel l'électrode de terre (218) est configurée pour influencer une capacité de l'électrode centrale (208), et dans lequel l'électrode rotative (210) est configurée pour influencer, en fonction de la position angulaire de l'unité de transmission (202), une capacité d'au moins une des électrodes de détection (212), et dans lequel le procédé (700) comprend les étapes suivantes :
séparation (702) de l'électrode de terre (218) et d'un potentiel de terre (226) au moyen d'un commutateur (302) ;
détermination (704) d'une première valeur de capacité de référence (228a) représentant une capacité effective de la première électrode de détection (212a) et d'au moins une deuxième valeur de capacité de référence (228b) représentant une capacité effective de la deuxième électrode de détection (212b) ;
liaison (706) de l'électrode de terre (218) et du potentiel de terre (226) au moyen du commutateur (302) ;
détermination (708) d'une première valeur de capacité (228a) représentant une capacité effective de la première électrode de détection (212a) et d'au moins une deuxième valeur de capacité (228b) représentant une capacité effective de la deuxième électrode de détection (212b) ;
calcul (710) d'une valeur angulaire (234) représentant la position angulaire de l'unité de transmission (202) en utilisant les valeurs de capacité de référence (228) et les valeurs de capacité (228).

2. Procédé selon la revendication 1, dans lequel les étapes du procédé (700) sont répétées de manière cyclique.

3. Détecteur d'angle de rotation (200) pour la mesure d'une position angulaire d'une unité de transmission rotative, dans lequel le capteur d'angle de rotation (200) présente les caractéristiques suivantes :
une unité de transmission (202) qui présente une électrode centrale (208) disposée dans un plan de transmission et une électrode rotative (210) disposée dans le plan de transmission, reliée à l'électrode centrale (208) de manière conductrice et décalée latéralement par rapport à celle-ci ;
une unité de détection (204) qui présente une première électrode de détection (212a) disposée dans un plan de détection et au moins une deuxième électrode de détection (212b) disposée dans le plan de détection, dans lequel les électrodes de détection (212) sont disposées de manière circulaire autour d'une électrode de terre (218) disposée dans le plan de détection, dans lequel un centre de l'électrode de terre (218) prédéfinit un centre de l'électrode centrale (208) ; et
une unité d'évaluation (206) qui est reliée aux électrodes de détection (212) et à l'électrode de terre (218) ainsi qu'à un commutateur (302) via une ligne de commande, et qui est configurée pour
la séparation (702) de l'électrode de terre (218) et d'un potentiel de terre (226) au moyen du commutateur (302) ; la détermination (704) d'une première valeur de capacité de référence (228a) représentant une capacité effective de la première électrode de détection (212a) et d'au moins une deuxième valeur de capacité de référence (228b) représentant une capacité effective de la deuxième électrode de détection (212b) ;
la liaison (706) de l'électrode de terre (218) et du potentiel de terre (226) au moyen du commutateur (302) ;
la détermination (708) d'une première valeur de capacité (228a) représentant une capacité effective de la première électrode de détection (212a) et d'au moins une deuxième valeur de capacité (228b) représentant une capacité effective de la deuxième électrode de détection (212b) ; et
le calcul (710) d'une valeur angulaire (234) représentant la position angulaire de l'unité de transmission (202) en utilisant les valeurs de capacité de référence (228) et les valeurs de capacité (228).

4. Détecteur d'angle de rotation (200) selon la revendication 3, dans lequel les électrodes de détection (212) ont la forme d'un segment de cercle.

5. Détecteur d'angle de rotation (200) selon la revendication 3 ou 4, dans lequel l'électrode de terre (218) est formée de manière circulaire.

6. Détecteur d'angle de rotation (200) selon la revendication 3, 4 ou 5, avec au moins une autre électrode de détection (212) disposée dans le plan de détection.

7. Appareil domestique (100) avec un détecteur d'angle de rotation (200) selon l'une des revendications 3 à 6, dans lequel le plan de détection du dispositif de détection (204) est disposé sur une face intérieure d'un panneau de commande (104) de l'appareil domestique (100) et le plan de transmission est disposé sur la face externe du panneau de commande (104), dans lequel le dispositif de transmission (202) est couplé de manière solidaire à un élément de commande (102) de l'appareil domestique (100) et monté de manière rotative sur la face externe, dans lequel un axe de rotation de l'élément de commande (102) coïncide sensiblement avec les centres de l'électrode centrale (208) et de l'électrode de terre (210) et le dispositif d'évaluation (206) est relié aux électrodes de détection (212) et à l'électrode de terre (218).

8. Appareil domestique (100) selon la revendication 7, dans lequel l'élément de commande est un commutateur rotatif (102) et se compose d'un corps de base électriquement isolant qui est formé en tant que pièce cylindrique, et dans lequel le dispositif de transmission (202) est installé sur la face de l'élément de commande (102) tournée vers le panneau de commande.

9. Produit de programme informatique avec un code de programme pour l'exécution du procédé (700) selon l'une des revendications 1 ou 2, lorsque le produit de programme informatique est exécuté sur un dispositif.
